# EUROPEAN PATENT APPLICATION

(11) **EP 1 304 040 A1**
(43) Date of publication of application: **23.04.2003**
(21) Application number: 01203999.6
(22) Date of filing: 19.10.2001
(51) Int. Cl.: A23B 4/06, A23B 4/16, F25D 23/00

(54) **A method and system of storing and displaying meat**

(71) Applicant: Hood, David E., Dublin 18 (IE)
(72) Inventor: Hood, David E., Dublin 18 (IE)
(74) Representative: Shortt, Peter Bernard

(57) **Abstract**

The invention provides a method of producing, storing and displaying red meat. The method includes the steps of:
a) packaging selected cuts of raw red meat in a suitable pack;
b) oxygenating the packed meat at an appropriate concentration of oxygen to develop a bright red colour in the meat and to maintain colour stability throughout subsequent storage of the packaged meat;
c) rapidly freezing the meat to a temperature in the range -40°C to -20°C, preferably - 20°C, and maintaining the meat at a temperature in this range during prolonged storage;
d) storing the frozen meat packs in a cabinet in the absence of light; and
e) providing means by which a consumer may remotely view the meat contained in the packs or a previously prepared image thereof with a view to selecting one or more or said packs for purchase.

The invention also includes a system for storing and displaying red meat for retail sale. The system includes a storage cabinet for meat packs in the absence of light and including refrigeration means for maintaining the stored meat at a temperature in a pre-determined temperature range. There are viewing means associated with the cabinet by means of which a consumer may remotely view the meat packs or a previously prepared image thereof.

## Description

### Field of the Invention

The invention relates to a method and system of storing and displaying meat, and products derived from meat, in particular red meat. The term "red meat" as used in the context of this specification includes beef, lamb, pork, venison and the like in the form of cuts or in comminuted form.

### Background of the Invention

Milk, fresh meat and bread are major constituents of the European diet. Nowadays, bread, milk and dairy produce of all sorts are widely available in many diverse forms. They are attractively marketed using many different packaging systems and sold in a host of different retail outlets. Yet meats, and especially the more expensive cuts such as sirloin steak and fillet or pork steaks, as well as high quality burgers, are not nearly so widely available.

In spite of many attempts to market meat in an innovative way, there has been little success in the retail market. Butcher shops remain an important feature of fresh meat retailing because consumers like to choose and to have the opportunity to discuss their choice with the butcher. It is generally thought that butcher shops survive as an inevitable consequence of the inherent variability and lack of consistency in meat quality, especially beef. The only real advance in meat marketing has been in the packaging systems used. Many of these are more applicable to wholesale rather than retail marketing. One system known as modified atmosphere packaging (MAP) now widely used in retail marketing, depends on a higher level of oxygen than air to improve colour and extend shelf life by several days. However, apart from developments in packaging, the sale of fresh meat to the public has remained practically unchanged for generations.

A major difficulty in marketing meat is the fact that it is a very complex commodity, much more so than other major foods. There are many reasons for this. First, meat is derived from a disassembly process of manufacture which involves breaking down a carcass into various parts, producing a very heterogeneous range of cuts, joints and trimmings. The units of manufacture exhibit great variability. They are dissimilar in appearance, shape, size, fat content etc. Cuts from a single carcass show a wide range in quality and value. There is a huge difference between cuts like sirloin and fillet on the one hand and plate and flank on the other. There is frequently variation in consistency and colour even within the same muscle, especially the large muscles of the round. Compared with milk, therefore, which is liquid, homogeneous and uniform, meat is an extremely complex raw material. It is difficult to handle in all subsequent packaging, processing and marketing operations, and especially where the principal objective is to preserve the integral structure and quality of the meat.

Meat is a raw food, susceptible to contamination from spoilage and food poisoning microorganisms. Production must be very carefully controlled to minimize microbial hazards, although it is difficult and impractical to eliminate them completely.

Another great difficulty with fresh red meat is that it has a very short shelf-life, due principally to the rapid discolouration which occurs when it is exposed to air. This discolouration is unavoidable in the presence of oxygen and it occurs most rapidly at low oxygen concentration. In the retail market place, whether it be a butcher's shop or supermarket display cabinet, meat turns brown quite rapidly. Because of this, it is extremely difficult to extend shelf-life beyond several hours in a butcher's shop or two to three days for pre-packaged meat in a supermarket display cabinet. The reaction may be slowed down by using low temperature during storage and retail display and by increasing the oxygen concentration in modified atmosphere packs, but inevitably oxidation of the pigment occurs and the meat turns brown. The effect is partly biochemical but it is greatly accelerated by bacterial growth. Large numbers of micro-organisms metabolise available oxygen at the meat surface reducing the partial pressure of oxygen to a level that accelerates the browning reaction.

A further major factor contributing to the short shelf-life of meat is due to loss of moisture. Lean meat contains more than 70% water. This is partly lost by evaporation and partly by accumulation of fluid which exudes from the meat. The latter phenomenon is a particularly troublesome feature of packaged meat. The gradual appearance of exudate, or drip as it is called, during retail display, may be masked for a time but is an inherent and unavoidable characteristic of cut meat. The use of absorbent pads in packaged fresh meat and low storage temperatures are the best means of control but they can only extend shelf-life by a day or two at most.

Because of its complex nature and the problems affecting its shelf-life, meat certainly presents many difficulties in relation to marketing at retail level. Since shelf-life is limited to only a few days at best, it is impractical to attempt to export it in retail packs. Shelf-life is much too short to allow marketing beyond a limited distribution boundary. For anything more ambitious than this, a totally different approach is needed which will overcome the many diverse problems that are inherent characteristics of fresh red meat.

### Object of the Invention

It is an object of the invention to overcome or minimise the problems referred to above, and to provide a method and system of storing and displaying meat in a novel way, in which the meat is presented in a way which is attractive in appearance to the consumer and is of improved eating quality, with improved safety and traceability. More particularly, it is an object of the invention to produce meat with a bright red colour at the point of sale, with a shelf-life of several months and excellent eating quality. It is also an object of the invention to provide a novel method and means for facilitating the choice of selected meat cuts by a consumer.

### Summary of the Invention

According to the invention, a method of producing, storing and displaying red meat comprising the steps of:
a) producing meat in accordance with approved production system that guarantees quality and safety to the consumer;
b) a system of "traceability" for the meat that defines the origin of the meat, during all stages of processing and distribution including retail sale;
c) oxygenating the packed meat at an appropriate concentration of oxygen to develop a bright red colour in the meat and to maintain colour stability throughout subsequent storage of the packaged meat;
d) packaging selected cuts of raw red meat in a suitable pack, retaining the shape of the original (unless deliberately altered) cut and using a skin tight package that prevents any internal frosting of the meat and prevents drip and weight loss;
e) before or after step d) rapidly freezing the meat to a temperature in the range -40°C to -2°C, preferably -20°C, and maintaining the meat at a temperature in this range during prolonged storage;
f) storing the frozen meat packs in a cold store and subsequently in a retail cabinet in the absence of light; and
g) providing a suitable refrigerated cabinet that will store the meat at the required frozen temperature allowing arrangement of cuts during storage and display and selection and delivering of the selected pack;
h) providing a means by which a consumer may remotely view the meat contained in the packs with a view to selecting one or more of said packs for purchase.

The invention also provides a system for storing and displaying red meat for retail sale comprising
a) a storage cabinet for storing packaged meat in the absence of light and including refrigeration means for maintaining the stored meat at a temperature in a pre-determined temperature range;
b) a viewing means associated with said cabinet by means of which a consumer may remotely view the meat contained in packs stored in said cabinet; and
c) a means of selecting and delivering the chosen cut from the said cabinet to the consumer.

Preferably, only meat from approved production system is selected for subsequent processing. For example, prime beef from young animals is slaughtered and carcasses dressed according to highest hygienic standards and primal cuts of best quality meat are prepared and aged for appropriate periods. The meat is prepared and packaged according to strictly controlled hygienic specification to achieve uniformly low bacteriological surface counts and freedom from pathogens. Stringent bacteriological controls are adopted during handling, preparation and packaging, starting with selection of animals at the farm, transportation and pre-slaughter treatment and including the slaughter operation through all processing stages and ending with the finished packaged product. Best manufacturing practice and state of the art systems in relation to all these operations are meticulously observed. This is essential firstly to maximise storage life of the raw meat, especially during ageing at temperatures above freezing point and secondly to ensure that it remains red during the complete period of marketing and thirdly to extend shelf-life of frozen packs in terms of optimum shelf-life, colour and eating quality for at least several months. Furthermore it is essential to guarantee safety and to achieve traceability at all stages of the operation.

The meat packs are oxygenated at the appropriate concentration of oxygen and at the optimum time to develop the brightest red colour and maintain colour stability throughout the subsequent period of frozen storage. The same bright red colour will be retained to point of sale.

In order to preserve the flavour, succulence, taste and tenderness produced by the process the meat cuts, e.g. in the form of steaks and/or burgers are rapidly plate frozen, or a suitable freezing technique, used in such a way that the structure, shape and appearance of the meat are unchanged. It is immediately shrunk wrapped, for example under vacuum, in a film having skin-tight properties and that optimally preserves the oxygenated status of the meat.

Whilst the invention is primarily aimed at marketing traditional cuts of meat, it also provides an opportunity to present different shapes and sizes of cuts according to particular market preferences. Thus, for example, steaks might be altered to assume a rectangular shape as part of a novel marketing strategy.

The meat products of the invention are frozen rapidly and maintained in the required condition for prolonged periods at a temperature of -20°C. The meat packs are held in the dark at all times so that colour does not change nor fade during several months storage. Distribution to final retail outlets also maintains this low and constant temperature. The quality of the meat, especially its bright red colour is maintained throughout distribution and storage.

It is an essential feature of the invention that the meat is protected from light until it is finally removed from a storage cabinet at the point of sale. The meat must therefore be stored in the dark. This obviously presents problems in adequately displaying the meat since it is essential that the customer view the meat in order to make a selection and a purchase. In accordance with the invention this is achieved by allowing the customer to view an image of the meat prior to purchase.

In one embodiment the image may be read by using image information stored in or on the package of each piece of meat and shown to the customer on a VDU screen or monitor.

Alternatively in accordance with the invention the customer may view the meat by means of a live television camera or a camcorder system in which the image is stored on video tape or other storage media or using any other visual scanning system that allows the image of the meat to be viewed remotely on a screen.

Hence the present invention can provide a system wherein the viewing means comprises a television camera which can transmit pictures of the cabinet's contents illuminated by low levels of light or a camcorder system which can transmit pictures of the cabinet's contents already recorded onto video tape.

An imaging system with the information stored in a bar code, magnetic strip or other non-volatile memory device, e.g. a solid state memory device or magnetic disc, reduces the need for mechanical movement within the cabinet as would be required for a live TV camera. This arrangement involves bar coding of the individual packs, taking a picture of each pack and storing the image as a data file in a computer. The customer views the meat on a VDU screen associated with the storage cabinet. The computer matches unique bar codes and images. The selection of a pack by a customer and its physical removal from the cabinet would be arranged to cause marking of that package code in the computer's data file as sold or deleting that record entirely from the data file. This process begins in the meat processing plant where each batch has associated therewith a set of package codes related to a corresponding set of images in a data file. The images and package code information are then loaded into the display cabinet computer. The recorded image of each piece of meat thus accompanies it through the process to the final retail outlet and may be viewed by a customer on a monitor screen.

Alternatively the information representing a consignment could be stored on a portable magnetic, optical or opto-magnetic disc, e.g. a floppy disc or CD ROM, to accompany each consignment of packaged meat.

This information would also be stored centrally for confirmatory purposes so that any package code could be checked back to the central computer and its provenance checked.

Instead of transferring the data on non-volatile memory media, it could be transferred by directly downloading the information from the central computer to the satellite computer, e.g. via a private computer network or the Internet. In such a system each package would have a unique package code on it and the image data stored in the computer could supply image information related to each package code. Using such a system the satellite computer would be able to relate each package code and the related image information. This information would be made available to the satellite computer to be downloaded at any time e.g. it could be pre-loaded to await a particular consignment of packaged meat or when the consignment actually arrives.

The satellite cabinet at the retail outlet would be fitted with a computer and monitor screen capable of displaying a high quality graphic image. Individual package codes would then be read and matched up with the stored image. One method of doing this would be to read in the bar coded package code using a hand operated bar code reader as each package is placed in the display cabinet. The computer could then match these numbers with the images it has already obtained and would thus be able to immediately display the image on the screen.

As an alternative to hand scanning the bar codes the cabinet could have a system of presenting the packaged meat on a continuous feed mechanism to read each individual package code.

It may be sufficient to store the imaging information on a bar code at the initial stage and that another computer can read this information at the point of sale.

The images would be created at the meat processing plant just before or after packaging and/or freezing. Photographs could be taken on a photographic film using sophisticated studio lighting which would enhance the quality of the image. The processed film having negative or positive images could then be scanned to produced digitised images which could be utilised by the computers. Preferably a digital camera would be used which would create digitised images immediately without any further processing as is necessary with a film. The digitised images could be stored in any of a large number of file formats and are preferably in compressed form to avoid using too much of the non-volatile memory used for storage.

In another embodiment a live TV camera or a camcorder could provide pictures of the packages within the cabinet. Such a system would require storage in low light conditions if a TV camera is used, but storage could be in the dark if recorded video pictures are used. A constant temperature of -20°C is preferred. A simple way to mechanically move the packages and/or the camera inside the cabinet would also be needed if a live TV camera were used.

A means would also preferably be required in all embodiments for a customer to reject a delivered package if he/she wished to do so.

The option to reject a specific already delivered pack within the cabinet and to choose another might, however, be dispensed with altogether. The packaged meat would simply be displayed allowing the option of rejecting or accepting the meat before it is finally delivered. Since all the packages will have a high degree of standardisation and be subject to a strict quality control regime, it is likely that the rejection rate will be extremely low. This possibility of dispensing with this step should therefore be included as an option since it would greatly reduce the complexity of operation of the cabinet. Any rejects would immediately be returned to the frozen dark cabinet or frozen storage room for recycling. This could be accomplished very quickly so that there would be no product deterioration due to exposure to non-ideal conditions. The final "carry-home" package would be insulated and designed to exclude light in order to preserve maximum quality.

The invention also provides a system of final wrapping of the meat after viewing by the purchaser, designed to allow "carry-home" in optimum condition

A further important point of the invention is that it offers a system of security and "traceability" which starts at the point of production, continuing through processing, distribution and retail marketing to the ultimate consumer. It provides a means of tracing the source of the original meat, thereby making it possible to give an absolute guarantee of quality and safety. There is great commercial value in this. Recent events in the beef industry such as the potential dangers from BSE, suspected use of growth hormones, concerns about specific pathogens such as E coli 0157 and Salmonella, and general fears about health, have made consumers wary of beef and created a demand for defined systems of production and quality guarantees. It is imperative under these conditions to have a completely defined system of control. The invention makes such a system possible, including for the first time, one that can be applied in marketing, at distant locations from the point of production.

The invention thus provides the opportunity to market specially branded products and those conforming to defined systems of production such as Halal and organic beef production

The invention also provides a system of control that allows the export for retail sale of small individual packs of red meat. There are statutory restrictions on this because of the inherent difficulty of identification and control of individual packs or of having a satisfactory means of tracing the meat back to source from any point in the distribution and marketing chain, such as DNA monitoring. The invention effectively overcomes these problems.

A modern television system needs only very low light intensity to view a subject so that a camera may be used to examine the meat stored in the cabinet. The image is viewed by the customer on a VDU (or monitor) allowing the customer to choose a suitable pack. The product is illuminated for viewing to show it in the most attractive way. Light wave-length is chosen which shows the meat to best effect but which also minimises any effect on colour stability. The fact that the meat is not physically seen by the customer should not present a problem, provided the meat finally delivered to the customer lives up to its image on the monitor screen. Thus, it is very important that the colour of the meat and all other characteristics displayed on screen are realistic.

An embodiment utilising a pre-existing image related to the bar coding of the individual packs, eliminates the need for any mechanical movement within the cabinet. Another option would be to store the entire image in the bar code or magnetic strip, probably in compressed form, which is then read by the computer at the retail end as the packages are placed in. the cabinet.

The customer views the meat on a VDU screen associated with the storage cabinet. The computer matches unique bar codes and images. The selection of a pack by a customer and its physical removal from the cabinet deletes that package code from the computer memory or marks it as sold.

The cabinet is provided with means to deliver a package once it has been selected. Suitably, this might be done by handling means controlled by an electronic scanner that recognises the selected bar code and delivers the piece of meat via an automatically operated drawer or chute. Alternatively it could be delivered from a known location already identified in the computer's data file.

Where a television or camcorder system is used to view the meat, frosting of the meat packs within the cabinet could cause viewing problems. The problem of frosting in frozen food is primarily due to the contact of the cold surface with a warmer moisture laden air which then condenses and re-freezes. Because the invention uses a completely enclosed system, any problem from water vapour ingress will be greatly reduced and frosting will not therefore occur. A further important advantage of the enclosed system is that any water vapour, perhaps emanating from the product itself is not allowed to form frost on the product. Thus means are provided within the cabinet to minimise the internal water vapour content within the cabinet.

In addition, the characteristics of the packaging film may be chosen to contribute to reduced water vapour emission. Preferably, film with a low water vapour transmission rate is used to minimize any transfer of water vapour from the meat. The film may be designed to incorporate optimal characteristics of both water vapour and oxygen transmission rates for the product. Other aspects of the film from a marketing point of view, include excellent presentation, good printing properties, clarity and strength would also be incorporated in the design.

Currently, there are many diverse systems used in the marketing of meat which involve some form of packaging. At retail level they range from supermarket prepacks in which meat is placed on a rigid plastic tray, often transparent, and then over-wrapped in an air-breathing film, to more sophisticated MAP systems (modified atmosphere packs). There is an increasing use of high oxygen MAP packs where the meat is placed in a rigid impervious container with a sealed-in atmosphere containing oxygen. The concentration of oxygen gas and the gas volume within the pack are designed to prevent a significant reduction of oxygen content through metabolic activity during storage.

Films used in vacuum packaging have a high degree of impermeability to oxygen and water vapour. Examples are co-extruded EVA/PVDA/irradiated EVA shrink bags, polyvinylidene chloride (Saran), nylon/low density polyethylene and nylon/surlyn laminates. The best meat barrier film laminates have a permeability of 20ml/m²/24hr/atm. and water vapour permeability of 0.4-0.5 g/m²/24hr/atm. High vacuum (ca. 1 torr) gives the best results with respect to surface colour. High vacuum also improves both the appearances of fat, which otherwise may be discoloured by meat fluids, and the colour of the meat on final re-exposure to air. Vacuum packaging systems have been successfully used for meat for decades but mainly confined to the wholesale market. Retail systems, which depend on vacuum packaging to extend shelf-life, have been relatively unsuccessful because of the poor colour of the meat i.e. it is purple rather than the bright red colour strongly preferred by consumers.

Flushing meat packages with inert gas avoids internal pressure on the meat due to vacuum packaging and provides an alternative system of storage in the absence of air which does not distort the shape of the packaged meat. This can be especially important in packaged meat in the form of small joints and steaks. Packaging retail cuts in oxygen-free nitrogen and/or carbon dioxide allows for extended storage because oxidative colour changes are prevented and bacterial growth is reduced. The principal effect of carbon dioxide is of course microbiological rather than chemical, whilst nitrogen does not have any specific effect and may be considered to be quite inert. Again because of the unattractive colour this system has had limited appeal and application is confined to situations where shelf-life rather than colour is of paramount importance.

Low levels of oxygen that may gain access during sealing or storage can cause oxidation, resulting in pronounced surface discolouration. Methods of removing low levels of oxygen using hydrogen in the gas together with a catalyst incorporated in the packaging film have been developed. Retail cuts of fresh beef do not discolour during periods of up to 3 weeks at 0°C, using a catalytic oxygen scavenging system, and there is no difference between carbon dioxide and nitrogen, in relation to the rate of discolouration after eventual exposure to air.

In the case of retail consumer packs, the overriding consideration is the maintenance of a stable red colour and this is the principal criterion in designing a suitable package. For over-wrapping, films must have good oxygen permeability whilst at the same time provide some barrier to the passage of water vapour. Commercially, however, an oxygen permeability value of 8-12 1/m²/24hr/atm. is more common. The most widely used films for over-wrapping include polyvinyl chloride (PVC), irradiated low-density polyethylene and ethylene/vinyl acetate copolymer. These combine the properties of high oxygen and low water vapour permeability with good stretch and shrink characteristics which provide a close skin fitting protective package during storage and retail display.

The advantage of an abundant supply of oxygen in developing a thick layer of red oxymyoglobin pigment at the surface has been exploited commercially through the use of high oxygen packs. Meat packaged in 80% oxygen and 20% CO₂ remains an attractive red colour for at least a week at +1°C, depending on the particular origin of the cut. The thick bright-red surface layer of oxymyoglobin masks the development of metmyoglobin underneath. The environmental volume of surrounding gas must be large enough to accommodate reduction by meat respiration and prevent the oxygen pressure falling to an effective level during storage.

In the method of the invention, the meat is oxygenated at the appropriate time. It is important to choose optimum conditions that will produce the best results during long term storage. Preferably, the meat is frozen after packaging but there may be an intermediate stage of tempering to allow the most efficient cutting which will produce the best shape and most attractive presentation. A skin package such as that available when Surlyn (Trade Mark) is incorporated into coextruded packaging film has been found suitable to achieve the required objectives of tightest possible cover over the surface of the meat, excellent moisture barrier and optimum stability of red oxymyoglobin pigment during subsequent frozen storage in complete darkness. Other suitable films may produce an equally acceptable result; the best packaging solution is selected depending on technical and economic factors.

Given the establishment of a strong consumer confidence in the product, the final take-home package might be incorporated as an integral part of the whole system. In this case, the meat would then only be viewed when the outer wrapper is removed, which might be at the point of cooking rather than the point of sale.

Preferably, in accordance with the invention, meat of a high quality is used. Thus, in carrying out the process it is important to take full account of all the factors that control meat quality. Meat quality depends on a great many interrelated factors ranging from physical conditions of the processing and storage environment, biochemical properties of the muscle tissue, and microbiological status of the meat. The most serious problems associated with packaged fresh meat, which in turn significantly affect meat quality, are concerned with colour and especially colour stability and with water-holding capacity of the meat proteins. Biochemical aspects of these parameters are therefore most relevant. Further quality criteria, such as tenderness and flavour, are of greatest significance to the eating quality of meat. Differences in the latter attributes may be due to intrinsic properties which are not greatly affected by the method of packaging, or to extrinsic factors such as keeping quality due to microbial growth or to some other cause. At the point of purchase, however, colour and colour stability and the absence of drip are of paramount importance.

The meat has a bright red appearance at point of sale which is achieved by dealing successfully with all of the factors which control colour and colour stability. The process begins in the period prior to slaughter and is continued during all stages of preparation and packaging. The invention preserves colour in a unique way whilst other aspects of eating quality are controlled by incorporating state-of-the-art technology at every stage of the process both before and immediately after slaughter.

### Pre-slaughter stress

When an animal is slaughtered the pH of normal tissue falls from an in vivo value of 7.2 to an ultimate value of 5.4-5.6. Both the rate of fall of pH and the ultimate pH value influence the colour, water holding capacity and texture of the meat. Pigs are more susceptible to stress than bovines with sheep intermediate between these two. Stress susceptible pigs are known to produce a high incidence of pale, soft exudative (PSE) meat. The condition is caused by an abnormally rapid fall in pH immediately after slaughter when the result in denaturation of proteins and partial destruction of cell membrane. PSE meat causes problems in packaging; because of its low water-holding capacity, resulting from protein denaturation, it produces excessive drip. The colour is also abnormally pale; due to denatured protein deposition the normal pink colour of muscle pigment is obscured; the physical structure increases light scattering making the meat more opaque; autoxidation is also increased causing colour fading.

Muscle glycolysis is relatively more rapid in pigs than bovines and PSE is rarely observed in beef animals. Nevertheless there is evidence of appreciable difference in beef with respect to both colour and water-holding capacity due to differences in temperature/pH profiles post mortem. In other words, the PSE condition is a factor in beef quality also though probably not to the same extent as pig meat.

Biochemical conditions directly opposite to those producing PSE meat give rise to another type of abnormal meat, which is even more troublesome from a packaging point of view. This meat has a high pH, which is due to a low residual glycogen level remaining in the muscle at slaughter, following prolonged pre-slaughter stress. The problem is well known as dark-cutting or dark, firm and dry (DFD) beef. This meat is translucent and sticky to touch. It is unacceptable for retail packaging because of its dark-purple colour. There is also a reduced level of glucose in the muscle. Under aerobic conditions, DFD meat spoils more rapidly because Pseudomonads utilize the amino acids at an earlier stage. This factor together with high pH encourages the growth of putrefactive microorganisms.

These two extreme conditions produce unacceptable meat for packaging, PSE because of its extremely pale colour and excessive drip and DFD because of its dark colour, sticky texture and poor keeping quality. Between the extremes which produce these abnormal meat conditions, however, there is a wide range of meat types which are in general acceptable with respect to both colour and water-holding capacity but which nevertheless show considerable variability with respect to these two parameters. It is important to avoid abnormal meat and in the method of the invention meat is carefully monitored to exclude any defects in this respect. Only meat with an ultimate pH below 6.0 is used so as to exclude DFD meat. Steps are taken to avoid a rapid fall in pH during the initial period post mortem, thereby excluding the worst effects of PSE. PSE is avoided by minimising stress immediately before and at the point of slaughter and by efficient chilling of the meat.

Whilst the invention is primarily aimed at marketing fresh red meat in its native state, it may also be applied to processed meat that is treated to improve one or more quality attributes of the meat, without changing its appearance substantially. For example the meat may have a polyphosphate additive to improve water holding capacity. Additional water might be added to improve succulence and eating quality etc. Such processes are allowed in some countries, usually with strict controls regarding designation and labeling requirements. The invention may be similarly applied to all such products.

### Microbiology

Fresh meat bacteria occur almost exclusively on the surface of the meat, the deep tissues initially remaining virtually sterile. Each stage of slaughter, carcass dressing, cutting and packaging can be a source of bacterial contamination. The degree of surface contamination on a large piece of meat, such as a lamb carcass or a quarter of beef, has a major influence on the bacterial level on the cut meat prepared from it. In large pieces of meat, the surface area is small in relation to total volume, and surface effects are relatively unimportant but, with cutting, the situation changes dramatically, with bacterial contamination spread over a vastly increased surface area. After carcass dressing, the surface of a beef carcass can carry up to 10⁴ organisms/cm². Moreover, meat surfaces newly exposed by cutting provide a moist and nutritious medium which is ideal for rapid bacterial growth. After butchery, joints and pieces of meat for packing are likely to carry considerably higher numbers of organisms.

Under both aerobic and anaerobic conditions, typical of pre-packaged and modified atmosphere oxygen packs (aerobic) and vacuum packaged cuts (anaerobic), the combination of high pH and reduced glucose result in rapid bacteriological spoilage. Because of the reduced glucose level, Pseudomonads and other spoilage organisms utilise amino acids at an earlier stage.

An important reason for initially low bacterial counts is the need to age the meat before final slicing, packaging, freezing and storage. Bacterial counts must be very low at the beginning of this process to be at an acceptable level at the slicing and final packaging stage. Another reason is the need to produce comminuted meat products of the very highest quality. In the latter case the method of the invention provides a product that is bright red throughout at the time of purchase. To achieve this it is important to keep bacterial counts to a minimum to avoid any possibility of discoloration before freezing and to produce the best possible final appearance and excellent eating quality. Bacteriological considerations are particularly important in relation to comminuted beef. Even though it is preserved by freezing, the best possible colour and quality during storage and following eventual thawing will only be achieved by the highest possible hygienic standards.

### Water holding capacity

When exposed to the atmosphere, fresh meat loses weight by evaporation and the surfaces become darker as they dry out. It also loses moisture as exudate or drip which appears asphysical droplets of liquid on the cut surface. Evaporation can be prevented by packaging, but packaging often accentuates the latter problem, moisture accumulating as a visible free water exudate in the pack. Meat contains some 75% water in the lean tissue and the ability of the protein structure to retain this moisture within the tissue is of major importance in maintaining quality. The presence of even a small quantity of drip, is undesirable, since it gives meat an unsightly appearance and leads to rejection. Packages containing an absorbent pad beneath the meat are designed to minimise the effect. However, the occurrence of drip depends on intrinsic properties of the meat proteins, and the possibility of overcoming the problem by package design alone is strictly limited.

Both ultimate pH and the rate of fall of pH during postmortem glycolysis influence the occurrence of drip as well as colour of the meat. Stress susceptible pigs produce a high incidence of so-called pale, soft, exudative (PSE) meat that can cause particular problems in packaging. The condition results from an abnormally rapid fall in pH after slaughter, when the combined effects of high temperature and acid conditions produce maximum denaturation of sarcoplasmic and myofibrillar proteins and partial disruption of the sarcolemma. Glycolysis is more rapid in pigs than in cattle and sheep, and PSE is rarely observed in the latter two species although differences between muscles and even within the same muscle are well documented.

In the method of the invention these problems are to an extent overcome by freezing. At the same time it is important to avoid both extremes of the pH scale in relation to water holding capacity because of need to preserve excellent eating quality. Water holding capacity of proteins affects the way water is bound, whether in the packaged meat or when the meat is eaten and chewed. In relation to the latter, if moisture is lost too easily from the meat its texture will be fibrous giving an unpleasant "mouth feel".

### Meat colour

Myoglobin is the principal pigment of fresh meat and the form it takes is of prime importance in determining the colour of the meat. Haemoglobin, the principal blood pigment is also present in meat though at a much lower level.

The colour of fresh meat depends chiefly on the relative amounts of the three pigment derivatives of myoglobin present at the surface; reduced myoglobin (Mb), oxymyoglobin (Mb0₂) and metmyoglobin (Mb+). Reduced myoglobin, is responsible for the purplish colour of freshly cut meat and meat held under anaerobic conditions, e.g. in a vacuum package. On exposure to the air myoglobin combines rapidly with oxygen forming bright red oxymyoglobin which gives meat its typical attractive bright-red colour. When fresh meat is fully oxygenated the pigment is present 100% as oxymyoglobin. Oxymyoglobin is bright red, the typical attractive colour of fully oxygenated meat. Metmyoglobin is formed by oxidation to the ferric derivative. This pigment is brown, it is primarily characterised by a gradual darkening and browning of the meat surface. The accumulation of metmyoglobin is accompanied by a corresponding diminution in the proportion of oxymyoglobin. Ultimately the pigment may be totally converted to the oxidised form but this does not normally occur. In practice the meat is considered to be discoloured at about 40 per cent conversion.

The depth of oxygen penetration d into meat depends on the partial pressure Co of oxygen at the surface, the rate of oxygen consumption (Ao) by the muscle tissue and the diffusion constant (D) according to the following equation: d=2CoD/Ao. Pre-rigor meat has a very high rate of oxygen consumption resulting in a minimum penetration into the surface of the meat for several hours post mortem. After a couple of days, however, meat exposed for several hours to the air becomes red and the penetration depth of oxygen may be 6-7 mm. Particularly in a plentiful supply of oxygen, myoglobin is oxygenated to oxymyoglobin, the bright-red ferrous form of the pigment. A low partial pressure of oxygen on the other hand favours oxidation of the pigment and formation of the brown metmyoglobin derivative. The optimum partial pressure of oxygen for oxidation is 4 mm Hg. Both of these reactions, oxygenation and oxidation, take place at the surface of a freshly cut meat surface. Where oxygen is freely available, the red oxymyoglobin is formed but as oxygen penetration extends inwards to the limit of oxygen penetration, optimum conditions exist for metmyoglobin formation to occur (i.e. a partial pressure of approximately 4 mm Hg) and the brown form of the pigment predominates. Beyond the limit of oxygen penetration where conditions are anaerobic, the purple reduced form of the pigment, myoglobin, remains intact. Under practical conditions, all three pigments may exist together at the surface of cut meat.

Oxygenation occurs rapidly so that the meat turns red within half an hour at 5°C. Oxidation to metmyoglobin, however, occurs much more slowly, first appearing close to the limit of oxygen penetration, as a fine brown layer, and gradually becoming thicker and extending outward towards the surface. The meat becomes gradually darker over the next several days by diffusion and the gradual accumulation of the metmyoglobin pigment throughout the translucent surface layer.

### Factors in fresh meat discoloration

Autoxidation describes the spontaneous oxidation of oxymyoglobin, which takes place slowly in the presence of oxygen. When meat is held in air a decreasing gradient of oxygen partial pressure (or concentration) occurs in meat with an optimum for metmyglobin formation occurring several mm distance below the surface. The actual depth of oxymyoglobin is determined by a number of factors including duration of exposure, temperature, oxygen tension, diffusion of oxygen through the tissue and its utilisation by the tissue. Age of meat after slaughter also affects the depth of penetration by oxygen and limits the thickness of the oxymyoglobin layer. This is not a problem in the method of the invention which uses already aged meat in which the rate of biochemical oxygen metabolism is considerably reduced.

Autoxidation is highly temperature dependent, doubling for each 2°C increase in temperature. Incident light (e.g. in a supermarket display case) is a contributory factor in discoloration of fresh red meat. This is particularly so of frozen meat, and the extent of the effect depends upon such factors as wavelength and intensity of light, temperature, oxygen pressure, meat pH, storage time, and in the case of frozen meat probably also electrolyte concentration and presence of free transition metal ions. The effect of light is small under usual refrigerated conditions, provided UV wavelengths are avoided. In frozen meat however the effect of light is of paramount importance since light energy catalyses the oxidation reaction. Light becomes a critical factor in relation to the display of meat for retail sale. It turns brown in a matter of hours when exposed to light in a retail display cabinet. As will be shown later the method of the invention overcomes the problem of discoloration by introducing a novel system of viewing the stored meat following holding throughout its entire storage life in the dark.

Conditions which favour autoxidation, already discussed in detail, favour discoloration of meat in all practical situations. Temperature of storage exerts an appreciable effect. High temperatures favour greater oxygen scavenging by residual respiratory enzymes as well as other oxygen-consuming processes such as fat oxidation, thereby leading to the low p0₂ (partial pressure or concentration of 0₂) levels which are conducive to autoxidation. Low temperature, on the other hand, promotes increased penetration of oxygen into the surface and oxygen solubility in tissue fluids is enhanced, both increasing the depth of oxymyoglobin at the surface. The dissociation of oxygen from oxymyoglobin is also enhanced by higher temperatures thereby increasing the tendency for autoxidation of the deoxygenated myoglobin produced.

There is considerable difference in colour stability between different muscles in the carcass. In beef, for example, *M*. psoas or *M*. *longissmus dorsi* the most stable muscles. These correspond to beef fillet and short sirloin respectively. There are major differences in biochemical properties between these two muscles. *M*. psoas major is characterised by having a rapid rate of oxygen consumption and efficient oxygenation or 'blooming' on exposure to air. It also loses oxygen readily when the oxygenated muscle is placed in anoxia and reduction to deoxymyoglobin is rapid. This muscle is also susceptible to oxidation and metmyglobin tends to form during the reduction reaction. Conversely, M. *longissimus dorsi*, which has good colour stability, has a slower oxygen consumption rate that takes longer to bloom on exposure to air. Conversion to myoglobin is relatively slow. It resists oxidation more effectively and does not tend to form metmyoglobin during conversion to deoxymyoglobin.

Aged meat develops a better colour when cut, compared with non-aged meat. With the exception of very fresh meat aged meat discolours more rapidly the longer the period of storage. Both the better blooming and faster rate of discoloration of aged meat result from diminution of the meat's enzymic activity which occurs during the conditioning period. A thicker layer of oxymyoglobin forms in aged meat because the rate of oxygen consumption is lowered as substrates of glycolysis are exhausted, allowing greater penetration of oxygen into the meat.

To maximise these benefits, in accordance with the invention the meat is prepared from cuts several days after slaughter. The surface of the cuts is suffused with oxygen to develop the maximum depth of red oxymyoglobin pigment, giving the best possible colour to the meat. The difference in oxygen requirements for the different muscles may require individual adjustment.

The invention is further described with reference to the following non-limiting example:

### EXAMPLE

### Production

Only prime beef from young, two-tooth animals reared in an approved system, guaranteed free from anabolic steroids, beta-agonist or any other growth promoting agent is used. Only the carcasses of cattle, raised in a specially controlled environmentally friendly production system are accepted. Meat from approved systems is guaranteed safe to eat. The system is similarly selective in choosing suitable animals from other species. Animals are continuously inspected by veterinary staff to ensure the highest health and safety standards when they are slaughtered. The production system includes transportation from the farm and conditions of lairage prior to slaughter, all of which will be strictly monitored and controlled.

### Slaughter & Dressing

Animals are slaughtered on arrival at the abattoir or after an approved period of lairage and feeding. Carcasses are electrically stimulated to prevent cold shortening during subsequent chilling. Hind-quarters from beef carcasses are suspended by the aitch-bone to develop maximum tenderness in primal cuts. A high standard of hygiene is maintained throughout the complete slaughter and carcass dressing operation.

### Chilling & Storage

The temperature of carcasses is reduced efficiently without bringing about cold shortening of the meat. Carcasses are not permitted to touch at any point during chilling. Since it is recognized that the 24 hours before and immediately following slaughter are the most important for eating quality of meat, great attention is paid to operations during this critical period.

The main criterion of eating quality of meat is tenderness and one of the most important factors in achieving it is slow cooling. Toughening is avoided by keeping the muscle temperature above 10°C during the initial 12 hours. At the same time cooling of the surface to <4°C is required to inhibit bacteriological growth. It is important to arrange a chilling regime that provides optimum tenderness and minimum bacteriological growth. Subsequent ageing of individually vacuum packaged cuts for up to 14 days will overcome some of the problem of toughening but not entirely. The maximum beneficial effect of subsequent ageing is achieved when no cold shortening has previously occurred.

The method of the invention operates both systems i.e. slow cooling followed by ageing of vacuum packaged primal cuts, where this is appropriate to achieve the most tender meat. Meat from other species, such as pork, lamb, venison and the like is treated with the same care and including ageing of individual cuts if this is necessary.

### Preparation of cuts

The meat is prepared from carcasses under strictly controlled hygienic conditions. After chilling, carcasses will be broken into primals and trimmings. Noble cuts of the most valuable meat-sirloin, short sirloin etc. are aged for an appropriate period at a temperature of not greater than 5°C to guarantee maximum tenderness. Primal cuts are then cut into retail portions using a bandsaw or knife. Great care is exercised to produce uniformity in thickness of cuts, fat content etc. with the overall objective of reducing variation and producing standardised final products. The occurrence of bone dust on meat surfaces is minimised or completely eliminated. The sliced cuts, joints or comminuted meat are thoroughly oxygenated to develop a deep and bright red colour. This part of the process may be automated.

Each individual piece is then packaged under vacuum in a skin pack. This excludes air and prevents the formation of frost within the pack. The packs are immediately frozen to a temperature of -20°C for storage. Preferably, using systems such as plate freezing. It is important that the freezing system chosen preserves a smooth surface, regular shape and excellent appearance during and after freezing. It may be best to partially freeze the previously oxygenated cuts before slicing. Alternatively oxygenation might follow tempering and slicing into individual steaks.

The temperature of lean trimmings suitable for burgers is immediately reduced to 0°C is processed without any further delay. Again, the most suitable combination of temperature and oxygen concentration to develop maximum brightest red colour is used. Bacteriological considerations are critical to final quality and hygiene is therefore of paramount importance in relation to comminuted meat from whatever source, including trimmings. Other less valuable cuts may be used directly for mincing, combining suitable high quality trimmings with them.

### Marketing

Following storage, individual cuts are boxed and transferred to a cold store and held at a uniform temperature of -20°C throughout their subsequent storage life. During the complete period of storage and distribution, the temperature of the meat is held at -20°C ±1 °C. The degree of fluctuation is not greater than ±1 °C to avoid any possibility of ice crystal formation that might adversely affect final quality. The meat may be stored for up to several months until required for retail distribution and sale. The actual storage life in optimum excellent condition requires further research i.e. it may be possible to extend optimum quality storage. When required the frozen units are transferred to a retail display cabinet of the invention. This will consist of a frozen storage compartment with means for maintaining temperature at -20°C. A special feature is that the meat is held completely in the dark, except when it is viewed immediately prior to purchase.

The vapour pressure is controlled within the cabinet to prevent evaporation from the surface of the meat, thereby avoiding frosting of the packs. Display and selection is by means of electronic imaging. A potential customer may operate a VDU to view the meat and make a selection.

The invention provides a novel method and means for producing, preparing, packaging and storing red meat to provide a bright red colour and attractive appearance at the point of sale. It allows for several months shelf-life in optimum condition without quality deterioration. It permits the consumer to choose from a range of pre-packed stored cuts or joints, and thus permits the sale of quality meat in a wide range of retail outlets, and other possible marketing outlets.

## Claims

1. A method of producing, storing and displaying red meat, and certain products derived from red meat, comprising the steps of:
a) packaging selected cuts of raw red meat in a suitable pack;
b) oxygenating the packed meat at an appropriate concentration of oxygen to develop a bright red colour in the meat and to maintain colour stability throughout subsequent storage of the packaged meat;
c) before or after step a) rapidly freezing the meat to a temperature in the range -40°C to -20°C, preferably -20°C, and maintaining the meat at a temperature in this range during prolonged storage;
d) storing the frozen meat packs in a cabinet in the absence of light;
e) providing means by which a consumer may remotely view the meat contained in the packs or a previously prepared image thereof with a view to selecting one or more or said packs for purchase.

2. A method as claimed in Claim 1, wherein the meat is subjected to stringent bacteriological controls during handling, preparation, and packaging to achieve uniformly low bacteriological surface counts.

3. A method as claimed in any of the preceding claims wherein the water vapour content within the cabinet is maintained at a low level.

4. A method as claimed in any preceding claim, wherein the image may be read by using image information stored in or on the package of each piece of meat and shown to the consumer on a VDU screen or monitor.

5. A method as claimed in claims 1 to 3, wherein the consumer may view the meat by means of a live television camera or a camcorder system in which the image is stored on video tape or other storage media or using any other visual scanning system that allows the image of the meat to be viewed remotely on a screen.

6. A system for storing and displaying red meat for retail sale comprising:
a) a storage cabinet for meat packs in the absence of light and including refrigeration means for maintaining the stored meat at a temperature in a pre-determined temperature range; and
b) a viewing means associated with said cabinet by means of which a consumer may remotely view the meat packs or a previously prepared image thereof.

7. A system as claimed in Claim 6, which comprises a computer system by means of which images of the meat already held in digital form may be viewed.

8. A system as claimed in Claim 6, in which images of the meat already stored as part of a bar code on the particular pack may be viewed by a remote computer

9. A system as claimed in Claim 6, wherein the viewing means comprises a television camera which can transmit pictures of the cabinet's contents illuminated by low levels of light or a camcorder system which can transmit pictures of the cabinet's contents already recorded onto video tape.

10. A system as claimed in claim 6, wherein information representing a consignment of meat is stored on a portable magnetic, optical or opto-magnetic disc, e.g. a floppy disc or CD ROM, to accompany each consignment of packaged meat.
